# FASCICULE DE BREVET EUROPEEN

(11) **EP 2 274 179 B1**
(45) Date de publication et mention de la délivrance du brevet: **23.11.2011**
(21) Numéro de dépôt: 09746010.9
(22) Date de dépôt: 29.04.2009
(51) Int. Cl.: B60H 3/00

(54) **DISPOSITIF DE DESINFECTION D'UN SYSTEME DE CLIMATISATION POUR VEHICULE AUTOMOBILE**
VORRICHTUNG ZUR DESINFEKTION EINER FAHRZEUGKLIMAANLAGE
DEVICE FOR DISINFECTING A MOTOR VEHICLE AIR-CONDITIONING SYSTEM

(30) Priorité: 07.05.2008 FR 0853016
(43) Date de publication de la demande: 19.01.2011
(73) Titulaire: Renault s.a.s., 92100 Boulogne-Billancourt (FR)
(72) Inventeur: MAKAROV, Maxime, F-78220 Viroflay (FR); BOUAMRA, Kahina, F-91300 Massy (FR); AMEZIANI, Menouar, F-78280 Guyancourt (FR)
(86) Numéro de dépôt international: PCT/FR2009/050787
(87) Numéro de publication internationale: WO 2009/138691

(56) Documents cités:
- EP-A- 1 514 710
- DE-A1- 10 346 826
- JP-A- 2 068 216
- US-A- 3 750 556

## Description

La présente invention a pour objet un dispositif de désinfection d'un système de climatisation pour véhicule automobile. Elle a également pour objet un véhicule automobile équipé d'un tel dispositif.

Les véhicules automobiles sont des lieux clos de faible volume, soumis à des environnements changeants et souvent rigoureux. Il est donc indispensable d'y renouveler régulièrement l'air, et d'en réguler la température.

On utilise à cet effet des systèmes de climatisation, ou climatiseurs. Ces systèmes sont conçus de façon à ce que de l'air chauffé ou refroidi soit soufflé à l'intérieur du véhicule.

Les systèmes de climatisation pour véhicule automobile, en particulier les systèmes HVAC (Heating, Ventilation and Air Conditioning en langue anglaise) comportent généralement un circuit d'air entre au moins une bouche d'admission et au moins une bouche d'évacuation, sur lequel sont interposés divers moyens de traitement de l'air. La bouche d'admission d'air est une entrée d'air extérieur et/ou une entrée d'air recyclé. Les moyens de traitement de l'air sont notamment des moyens de ventilation pour mettre en mouvement un flux d'air à travers le circuit, des moyens de chauffage et/ou de refroidissement, comme par exemple un évaporateur, et des moyens d'épuration de l'air, notamment par filtration, par ionisation, par photocatalyse ou analogue. L'évaporateur destiné à refroidir l'air est en général disposé en aval d'un filtre à air, afin de ne pas être endommagé par des particules polluantes présentes dans l'air.

Parmi les moyens de traitement de l'air, on connaît ceux mettant en oeuvre un générateur de plasma, et notamment un générateur d'ozone, destinés à éviter le développement de microorganismes responsables des mauvaises odeurs de climatisation qui sont une source d'inconfort pour les passagers. De tels microorganismes se développent notamment à proximité de l'évaporateur. L'ozone généré est ensuite emporté par le flux d'air propulsé par les moyens de ventilation et traverse ainsi l'évaporateur.

Un tel dispositif de désinfection est connu du document US 3 750 556, qui est considéré comme l'art antérieur le plus proche.

On connaît des documents DE 102004030275 et EP 1867346 un réacteur plasma électrique de type corona muni de filaments métalliques fins portés à une haute tension et tendus à travers le flux d'air de ventilation entre la face avant de l'évaporateur et le filtre à air.

Ce système est toutefois assez volumineux et nécessite donc un espace important en amont de l'évaporateur.

On connaît également un réacteur plasma électrique à décharge à barrière diélectrique (DBD), comprenant des électrodes métalliques situées des deux côtés d'un matériau diélectrique fin et portées à haute tension alternative, comme par exemple le réacteur commercialisé sous la dénomination AQC® par la société Paragon. Un tel réacteur est fixé sur la paroi du système de climatisation, entre l'évaporateur et le filtre à air.

Ce type de réacteur est plus compact que les réacteurs corona, mais il n'est pas possible de le placer au milieu du flux d'air, ce qui fait que la répartition de l'ozone sur la surface de l'évaporateur n'est pas homogène et est difficile à maîtriser. De plus, pour un fonctionnement efficace, la partie génératrice du dispositif doit être balayée par le flux d'air, afin d'évacuer l'ozone qui se trouve autour de la partie génératrice. En effet, s'il y a trop d'ozone, l'ozone se recombine pour former de l'oxygène, et le désinfecteur perd de son efficacité. Or, la vitesse de l'air à proximité de la paroi où est monté le générateur dans le réacteur DBD est quasi-nulle.

En outre, de manière plus générale, la géométrie de la plupart des systèmes de climatisation, et en particulier des systèmes HVAC, est telle que l'espace entre le filtre à air et l'évaporateur est très réduit, de l'ordre de quelques millimètres, ce qui fait qu'il y a peu de place disponible en amont de l'évaporateur pour y disposer le générateur de plasma.

La présente invention vise à remédier à ces inconvénients.

En particulier, l'invention propose un dispositif plasma de désinfection d'un système de climatisation pour véhicule automobile, le dispositif étant capable de générer de l'ozone qui passe à travers l'évaporateur, la partie génératrice de plasma étant balayée par un flux d'air, le dispositif étant en outre adapté à un espace réduit entre le filtre principal et l'évaporateur.

L'invention a ainsi pour objet un dispositif de désinfection d'un système de climatisation pour véhicule automobile, le système de climatisation comprenant : a) des moyens de mise en circulation de l'air dans un conduit d'acheminement d'air, et, disposés successivement dans ledit conduit d'acheminement d'air, dans le sens de circulation de l'air, b) un filtre à air et c) un évaporateur.

Le dispositif de désinfection selon l'invention comprend :
- une dérivation contournant l'évaporateur et permettant une circulation d'air entre une zone située en aval de l'évaporateur et une zone située entre le filtre et l'évaporateur,
- une pompe apte à faire circuler l'air depuis la zone située en aval de l'évaporateur vers la zone située entre le filtre et l'évaporateur, via la dérivation, et
- un générateur de plasma apte à générer de l'ozone dans la dérivation.

Ainsi, la dérivation permet l'intégration du générateur de plasma dans des systèmes de climatisation à faible place disponible. L'air déjà filtré est aspiré en aval de l'évaporateur et est propulsé en amont de l'évaporateur à l'aide de la pompe. Il propulse ainsi l'ozone généré par le générateur de plasma dans la dérivation, sur la face avant de l'évaporateur.

La dérivation peut comprendre un ou plusieurs tubes montés sur le conduit d'acheminement d'air ou une double paroi du conduit d'acheminement d'air. L'utilisation de plusieurs tubes permet d'homogénéiser l'exposition de l'évaporateur au plasma.

Les tubes sont de préférence en matière plastique, en notamment en polymère, compatible avec l'ozone, pour éviter la corrosion du tube.

La dérivation est avantageusement une double paroi s'étendant sur toute la profondeur du conduit d'acheminement d'air. De cette façon, on obtient une exposition homogène de l'évaporateur à l'ozone.

L'invention a également pour objet un système de climatisation pour véhicule automobile comprenant un dispositif décrit ci-dessus, ainsi qu'un véhicule automobile comprenant un dispositif décrit ci-dessus.

D'autres avantages et caractéristiques de l'invention apparaîtront à la lecture de la description suivante, donnée uniquement à titre d'exemple non limitatif, et faite en référence aux dessins annexés sur lesquels :
- la figure 1 illustre schématiquement un système de climatisation pour véhicule automobile muni d'un dispositif de désinfection selon l'invention,
- la figure 2 est une vue de détail du système de climatisation, et
- la figure 3 illustre sous forme de schéma-blocs un système de commande du dispositif de désinfection selon l'invention.

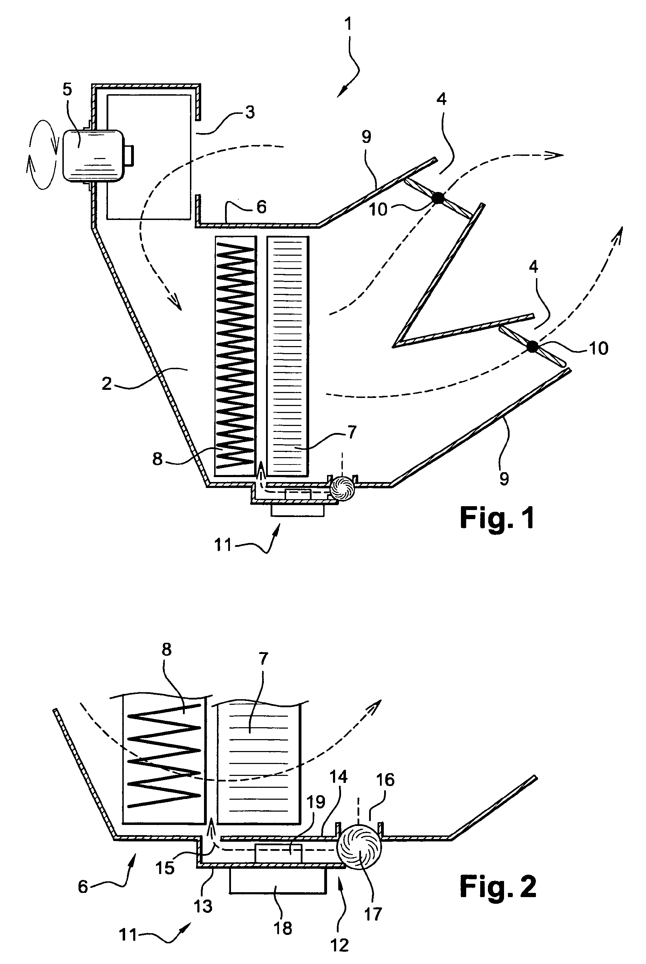

Le système de climatisation d'air 1 pour véhicule automobile, tel qu'illustré à la figure 1, comprend un circuit d'air 2 à partir d'au moins une bouche d'entrée 3 à travers laquelle est admis de l'air. La bouche d'entrée 3 est l'entrée d'air extérieur ou l'entrée d'air recyclé. Le système 1 comprend également une pluralité de bouches de sortie 4 destinées à l'aération de zones spécifiques de l'habitacle, voire d'un siège ou d'un autre organe du véhicule.

Le circuit d'air 2 comprend notamment un pulseur d'air 5, apte à mettre en circulation l'air issu de la bouche d'entrée 3, un conduit 6 d'acheminement de l'air ainsi mis en circulation vers une zone de traitement thermique qui comprend un évaporateur 7 et un filtre 8, à particules ou analogue, disposé en amont et à proximité de l'évaporateur 7. Le filtre 8 et l'évaporateur 7 sont disposés à l'intérieur du conduit 6 d'acheminement d'air. Les flèches indiquent le sens de circulation de l'air.

Le circuit d'air 2 comprend également une pluralité de conduits 9 d'évacuation de l'air en direction des zones et/ou organes à aérer, les conduits 9 d'évacuation débouchant sur des volets 10 de régulation du flux d'air aptes à réguler le débit d'air dans l'habitacle.

Le filtre 8 est destiné à piéger les différents éléments circulant dans le circuit d'air 2, et notamment des particules, des poussières, des insectes, ou du pollen. On peut par exemple utiliser comme filtre 8 un filtre à charbon actif ou un filtre à pollen.

L'évaporateur 7 est un échangeur thermique. Son rôle consiste à absorber le flux thermique provenant de l'air à refroidir. L'évaporateur 7 comprend ainsi un fluide frigorigène liquide qui est vaporisé par la chaleur extraite de l'air à refroidir.

Le circuit d'air 2 peut également comprendre d'autres organes de traitement de l'air, non représentés, comme par exemple un ionisateur, un dispositif de traitement par photocatalyse, un dispositif de traitement par précipitation électrostatique et/ou tout autre dispositif de traitement de l'air.

Le système de climatisation d'air 1 comprend enfin un dispositif de désinfection 11 selon l'invention.

Le dispositif de désinfection 11 est détaillé à la figure 2, sur laquelle les éléments identiques à ceux de la figure 1 portent les mêmes références. Tel qu'illustré à la figure 2, le dispositif 11 comprend une dérivation 12 qui fait partie du conduit 6 d'acheminement d'air. La dérivation 12 relie une zone située en aval de l'évaporateur 7 à une zone située entre le filtre 8 et l'évaporateur 7. La dérivation 12 comprend par exemple une double paroi 13,14 du conduit 6 d'acheminement d'air. La double paroi 13,14 comprend une paroi externe 13 constituant la paroi du système de climatisation 1 et une paroi interne 14 munie de deux orifices 15,16. Un premier orifice 15 débouche dans l'espace situé entre le filtre à air 8 et l'évaporateur 7, tandis qu'un deuxième orifice 16 débouche dans l'espace situé en aval de l'évaporateur 7.

La dérivation 12 peut par exemple s'étendre sur toute la profondeur du conduit 6 d'acheminement d'air.

Dans une variante non illustrée, la dérivation 12 peut comprendre une pluralité de tubes reliant la zone située en aval de l'évaporateur 6 à la zone située entre le filtre 8 et l'évaporateur 7. Chaque tube relie ainsi deux orifices réalisés dans le conduit 6 d'acheminement d'air, un premier orifice débouchant à l'intérieur du conduit 6 d'acheminement d'air, dans l'espace situé entre le filtre à air 8 et l'évaporateur 7, tandis qu'un deuxième orifice débouche à l'intérieur du conduit 6 d'acheminement d'air, dans l'espace situé en aval de l'évaporateur 7.

Le dispositif 11 comprend en outre une pompe 17 et un générateur d'ozone 18. La pompe 17 est destinée à faire circuler de l'air propre issu de l'évaporateur 7 depuis la zone située en aval de l'évaporateur 7 jusqu'à la zone située entre le filtre 8 et l'évaporateur 7, via la dérivation 12.

L'air issu de l'évaporateur 7 est ainsi réinjecté en amont de l'évaporateur 7, via la dérivation 12, sans traverser l'évaporateur 7.

La pompe 17 peut être disposée à n'importe quel endroit de la dérivation 12, de préférence au niveau de l'orifice 16 débouchant dans l'espace situé en aval de l'évaporateur 7 pour une meilleure propulsion d'air. On veillera de préférence à dimensionner la pompe 17 de façon à ce que le débit d'air généré soit suffisant pour propulser l'ozone assez loin à l'intérieur du conduit principal 6 du système de climatisation 1. On pourra typiquement utiliser à cet effet un micro-pulseur d'air, avec par exemple un débit de l'ordre de quelques cm³/s voire quelques cm³/min.

Le générateur d'ozone 18, également appelé ozoneur, ozoniseur ou ozonateur, est fixé sur la paroi externe 13 du conduit 6 d'acheminement d'air. Le générateur d'ozone 18 est muni d'une partie génératrice 19 qui est disposée à l'intérieur de la dérivation 12. Le flux d'air généré par la pompe 17 vient entraîner l'ozone produit par la partie génératrice 19 du générateur d'ozone 18 qui est ensuite projeté en sortie de dérivation 12 sur la face amont de l'évaporateur 7 par ce même flux d'air auxiliaire.

Dans une variante, la pompe 17 peut faire partie du générateur d'ozone 18. Elle peut par exemple être intégrée directement dans la partie génératrice 19 du générateur d'ozone 18.

Dans le cas où la dérivation 12 comprend une pluralité de tubes, l'emploi de plusieurs tubes permet de mieux répartir le flux d'air généré par la pompe 17 sur l'ensemble de l'évaporateur 7.

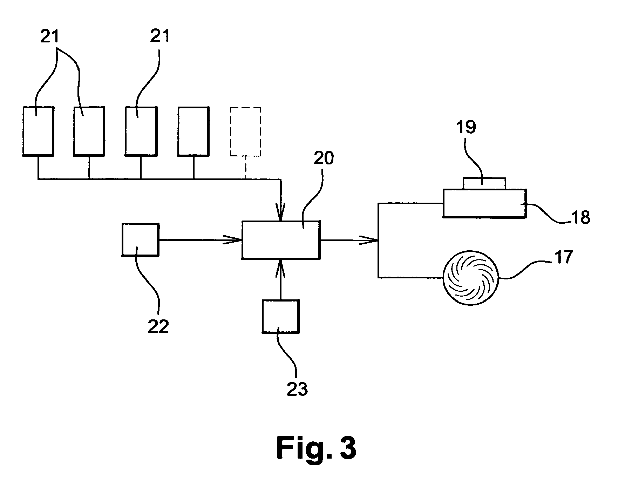

La figure 3, sur laquelle les éléments identiques à ceux de la figure 2 portent les mêmes références, illustre un système de commande du dispositif de désinfection selon l'invention. Un dispositif de commande 20, ou calculateur, est relié à des capteurs 21 indiquant par exemple la température, l'humidité, la présence de passagers, ou encore la position des volets. Le dispositif de commande 20 est également relié à un indicateur 22 de commande ON, par exemple un dispositif général de commande, ainsi qu'à un indicateur 23 de l'état du système de climatisation, indiquant par exemple s'il est en fonctionnement, ou le débit d'air. Le dispositif de commande 20 est enfin relié à l'ozoneur 18 et à la pompe 17. Le dispositif de commande 20 est ainsi par exemple apte à commander la tension d'application et/ou la durée d'activation de l'ozoneur 18, ainsi que la vitesse de rotation du ventilateur de la pompe 17.

L'ozoneur 18 peut être mis en marche manuellement par le conducteur du véhicule, ou automatiquement par le dispositif de commande 20, en même temps que la pompe 17.

Le dispositif de désinfection selon l'invention permet ainsi de réduire les mauvaises odeurs de climatisation à l'intérieur d'un véhicule automobile en détruisant de manière efficace les micro-organismes déposés sur l'évaporateur du système de climatisation. Il permet de répartir de manière homogène le flux d'ozone en direction de l'évaporateur. Grâce au dispositif, la partie génératrice de l'ozoneur est balayée en continu par un flux d'air pur, ce qui évite une autodestruction de l'ozone, et la partie génératrice de l'ozoneur reste propre. Ces avantages sont obtenus même avec des distances très courtes entre le filtre à air et l'évaporateur.

En outre, l'évaporateur étant plus humide donc plus pollué dans sa partie inférieure, le dispositif selon l'invention, disposé à proximité de la partie inférieure de l'évaporateur, permet de désinfecter efficacement cette partie de l'évaporateur.

Bien que le dispositif de désinfection selon l'invention puisse être utilisé dans tout type de système de climatisation, il est particulièrement adapté aux systèmes de climatisation de type HVAC.

## Revendications

1. Dispositif de désinfection (11) d'un système de climatisation (1) pour véhicule automobile, le système de climatisation (1) comprenant : a) des moyens (5) de mise en circulation de l'air dans un conduit (6) d'acheminement d'air, et, disposés successivement dans ledit conduit (6) d'acheminement d'air, dans le sens de circulation de l'air, b) un filtre à air (8) et c) un évaporateur (7), **caractérisé en ce que** le dispositif (11) comprend :
- une dérivation (12) contournant l'évaporateur (7) et permettant une circulation d'air entre une zone située en aval de l'évaporateur (7) et une zone située entre le filtre (8) et l'évaporateur (7),
- une pompe (17) apte à faire circuler l'air depuis la zone située en aval de l'évaporateur (7) vers la zone située entre le filtre (8) et l'évaporateur (7), via la dérivation (12), et
- un générateur de plasma (18) apte à générer de l'ozone dans la dérivation (12).

2. Dispositif (11) selon la revendication 1, **caractérisé en ce que** la dérivation (12) comprend un ou plusieurs tubes montés sur le conduit (6) d'acheminement d'air.

3. Dispositif (11) selon la revendication 1, **caractérisé en ce que** la dérivation (12) comprend une double paroi (13,14) du conduit (6) d'acheminement d'air.

4. Dispositif (11) selon la revendication 3, **caractérisé en ce que** la double paroi (13,14) s'étend sur toute la profondeur du conduit (6) d'acheminement d'air.

5. Système de climatisation (1) pour véhicule automobile, **caractérisé en ce qu'**il comprend un dispositif (11) selon l'une des revendications 1 à 4.

6. Véhicule automobile, **caractérisé en ce qu'**il comprend un dispositif (11) selon l'une des revendications 1 à 4.

## Claims

1. Device (11) for disinfecting an air-conditioning system (1) for a motor vehicle, the air-conditioning system (1) comprising: a) means (5) for circulating air in an air-delivery duct (6), and, placed in succession in said air-delivery duct (6), in the direction of circulation of the air, b) an air filter (8) and c) an evaporator (7), **characterized in that** the device (11) comprises:
- a bypass (12) bypassing the evaporator (7) and allowing a circulation of air between a zone situated downstream of the evaporator (7) and a zone situated between the filter (8) and the evaporator (7),
- a pump (17) capable of circulating the air from the zone situated downstream of the evaporator (7) to the zone situated between the filter (8) and the evaporator (7), via the bypass (12), and
- a plasma generator (18) capable of generating ozone in the bypass (12).

2. Device (11) according to Claim 1, **characterized in that** the bypass (12) comprises one or more tubes mounted on the air-delivery duct (6).

3. Device (11) according to Claim 1, **characterized in that** the bypass (12) comprises a double wall (13, 14) of the air-delivery duct (6).

4. Device (11) according to Claim 3, **characterized in that** the double wall (13, 14) extends over the whole depth of the air-delivery duct (6).

5. Air-conditioning system (1) for a motor vehicle, **characterized in that** it comprises a device (11) according to one of Claims 1 to 4.

6. Motor vehicle, **characterized in that** it comprises a device (11) according to one of Claims 1 to 4.

## Patentansprüche

1. Vorrichtung (11) zur Desinfektion einer Klimaanlage (1) für ein Kraftfahrzeug, wobei die Klimaanlage (1) Folgendes umfasst: a) Mittel (5) zur Zirkulation von Luft in einer Luftzuführleitung (6) und, nacheinander in der Luftzuführleitung (6) in Luftzirkulationsrichtung angeordnet, b) einen Luftfilter (8) und c) einen Verdampfer (7), **dadurch gekennzeichnet, dass** die Vorrichtung (11) Folgendes umfasst:
- einen Bypass (12), der den Verdampfer (7) umgeht und eine Luftzirkulation zwischen einem sich stromabwärts des Verdampfers (7) befindenden Bereich und einem sich zwischen dem Filter (8) und dem Verdampfer (7) befindenden Bereich gestattet,
- eine Pumpe (17), die die Luft von dem sich stromabwärts des Verdampfers (7) befindenden Bereich zu dem sich zwischen dem Filter (8) und dem Verdampfer (7) befindenden Bereich über den Bypass (12) zirkulieren kann, und
- einen Plasmagenerator (18), der Ozon in dem Bypass (12) erzeugen kann.

2. Vorrichtung (11) nach Anspruch 1, **dadurch gekennzeichnet, dass** der Bypass (12) ein oder mehrere Rohre umfasst, das bzw. die an der Luftzuführleitung (6) angebracht ist bzw. sind.

3. Vorrichtung (11) nach Anspruch 1, **dadurch gekennzeichnet, dass** der Bypass (12) eine Doppelwand (13, 14) der Luftzuführleitung (6) umfasst.

4. Vorrichtung (11) nach Anspruch 3, **dadurch gekennzeichnet, dass** sich die Doppelwand (13, 14) über die ganze Tiefe der Luftzuführleitung (6) erstreckt.

5. Klimaanlage (1) für ein Kraftfahrzeug, **dadurch gekennzeichnet, dass** sie eine Vorrichtung (11) nach einem der Ansprüche 1 bis 4 umfasst.

6. Kraftfahrzeug, **dadurch gekennzeichnet, dass** es eine Vorrichtung (11) nach einem der Ansprüche 1 bis 4 umfasst.
